# EUROPEAN PATENT SPECIFICATION

(11) **EP 2 343 590 B1**
(45) Date of publication and mention of the grant of the patent: **13.08.2014**
(21) Application number: 10192534.5
(22) Date of filing: 25.11.2010
(51) Int. Cl.: G02C 5/12

(54) **Nose support for glasses**
Nasenstütze für Brille
Support nasal pour lunettes

(30) Priority: 28.12.2009 KR 20090133489
(43) Date of publication of application: 13.07.2011
(73) Proprietor: Kim, Jeong Min, Jeonpo-dong, Busanjin-gu Busan-Si (KR)
(72) Inventor: Kim, Jeong Min, Jeonpo-dong, Busanjin-gu Busan-Si (KR)
(74) Representative: Vossius & Partner

(56) References cited:
- WO-A1-03/062904
- WO-A1-2008/042008
- DE-U1-202006 011 270
- GB-A- 427 831
- US-B1- 7 472 991

## Description

### CROSS REFERENCE

This application claims foreign priority under Paris Convention and 35 U.S.C. sctn.119 to Korean Patent Application No. 10-2009-0133489, filed December 28, 2009 with the Korean Intellectual Property Office.

### BACKGROUND OF THE INVENTION

The references in bracket used when describing the background of the invention correspond to the references mentioned in the respective prior art documents.

The device is an enhancement of prior Patent 2009-62282, which relates to a silicon tube type from the same inventor. The previous invention was a straight silicon tube that was shortly cut with a diameter of 2.2∅ and bore of 0.6∅. The unique softness of the silicon brings a soft touch to the nose with the nose engaging surfaces, however issues existed where it slid from the nose bridge while wearing heavy glasses or exercising. According to the drawings of the device, tears occur when the T-type fixation bridge (40) fixed by welding and inserts (30) and the T-type fixed jaw (51) of the prefabricated insert (50) is inserted, or force is applied by pulling or changing directions when the T-type fixation bridge (40) and T-type fixed jaw (51) are both inserted.

According to utility model registration #0429511, a nose column (30), which should be expressed as connection bridge, is fixed onto the nose bridge (20) supporting the glasses frame, which should be expressed as fixation insert, and a connection rod (41) combined with an insert tube (42) is formed, and a insert tube (42) can be inserted into the nose column (30). The nose support (40) and connection rod (41) and insert tube (42) is formed to be one body and is made of soft synthetic resins. The end of the nose column (30) forms an insert protrusion (31) and a insert jaw (44) is formed around the inside floor of the insert tube (42) so that the insert tube (42) is fixed into the nose column (30) and does not easily slip out.

However, the technology of utility model registration #20-0429511 has already been tested and has the following defects to become a product. Thus, the components of glasses must be light in weight and have a clean exterior and aesthetic qualities, also the blockage of sight must be minimized, which makes the diameter of the support to become very small. Therefore, the nose column (30) has a 0.5mm standard for diameter and must be measured in a minute measurement. So, the outer diameter of the insert tube (42) inserted into the nose column (30) must not exceed 2.5∼3.5 ∅ or else will looked away from the opticians due to the blunt look.

For this reason, the insert tube (42) diameter must be within the range of 2.5∼3.5 ∅ and the length must not be excessively long or else will lose merchantable quality. Therefore, the connection rod (41), which connects the nose support (40) and the insert tube (42) into one body, should have a smaller diameter than the insert tube (42). To be compatible with current glasses frames the length of the insert tube (42) must not exceed 6mm like the device.

On the other hand, the present inventor has manufactured a product that has the nose support (40), connection rod (41) and the insert tube (42) as one body through molding. The connection rod (41) is only a few mm of length and has a diameter of 1∼2mm, which needs to be made up of reasonable flexible and soft material, however, considering all existing synthetic resins, including urethane, such material with hard and soft qualities cannot coexist. Thus, flexibility and softness features are inversely proportional for connection rod (41), which needs a small diameter and short length. In other words, when the flexibility is emphasized the nose support (40) gives irritation and a blunt touch to the nose, while when the softness is emphasized the nose support (40) slips easily from the bridge of the nose when the glasses is heavy or while exercising.

To solve the issue, a connection rod (41), which has both qualities of flexibility and softness should be developed, however from the limitations of molding and technology it is close to impossible to develop such synthetic resins material with the physical features. Furthermore, molding the connection rod (41), nose support (40) and the insert tube (42) into one body makes it almost impossible to manufacture an ideal body which is both flexible and soft.

Moreover, when the insert tube (42) is made of soft synthetic resins the insert protrusion (31) of the nose column (30) easily slips out from the nose column (42) even when the insert jaw (44) of the insert tube (42) tries to fix the insert protrusion (31), which makes it hard to have merchantable qualities.

Therefore, the inventor finally used a prefabricated insert (50) as the previous product to fix the nose support (60) with a screw (61), and located a silicon tube (20) in between the fixation insert (30), which is welded onto the glasses frame (5), and the nose support prefabricated insert (50) to produce a proper featured product. The silicon tube (20) should have a new structure having both be flexible and soft features, and is also must endure pulling and should not slip out from the insert (30) and nose support prefabricated insert (50).

Next, observing the drawing of Japan public utility model registration 57-45625, a pipe (7) exists that looks similar to the silicon tube (20) of the device, however, the pipe (7) does not exist to provide the identical features of the silicon tube (20) and is an assembly-use pipe to insert the bed frame (6) that connects two pipes (7) and the fixation pins (3) via molding onto the glasses frame. Also, this pipe must be made out of hard material, such as, metal or hard plastics. Furthermore, to stabilize the insert status of the pin (3) and bed frame (6) inside the pipe (7), a board spring (10) is welded and the holes (11) formed on the side of the pipe (7) insert the arms (8) to connect with the nose support (5). As a result, the invention shows different structures, applications and effects, which departs from the features of the device.

Once again, observing the drawing of Japan public utility model registration 63-33125, an example of bending the silicon coated tube that is mounted on the surface of the plastic main piece (1) into a "∧" shape and insert onto the fixed protrusion pin (3) and later on fixing with screws and fixing with insert (4) that is welded onto the glasses frame was shown. The plastic main piece (1) is coated with silicon on the surface and is bent into a "∧" shape and then fixed onto the glasses frame for use. The wearing sensation is more comfortable than existing hardened nose support, however, the invention shows different structures, applications and effects, which departs from the features of the device.

### 1. Field of the Invention

The device relates to a nose support for glasses, which comprises of a silicon tube that is most reasonable and has scientific structure, which does not slide from the user's bridge of the nose and provides softness and flexibility so that the pressure applied to the nose is distributed and absorbed to minimize irritation and create comfort to any type of nose shapes.

### 2. Description of the Related Art

It is known from EP1708012 to provide an elastic hinge for eyeglasses with temples made of plastics and having a core. The elastic hinge provides for an overtravel movement.

From EP0462936, it is also known to provide a double sprung spectacles hinge.

The prior art does not provide for a nose support which permits unrestrained multi-axial movement.

Therefore, the device relates to an apparatus for a nose support for glasses that enhances and solves the previous issues of the prior patent and provides a better product.

To solve the issues, the device has been comprised as below. From the purpose and technical notion applied to the invention, it is not limited to the composition below and can be modified and further created including the level of structure change, change in shape, change in material, increase in comprising parts, change in color and will not mention or discuss lower conceptual technologies or matters.

### [Preferred embodiment #1]

In accordance with a first aspect of the invention, there is provided a nose support device for spectacles, comprising: a fixation insert welded onto a glasses frame; a T-type fixation bridge inserted into a second hole and first insert groove of a silicon tube; a gusset plate located close to a top surface of the silicon tube when the T-type fixation bridge is inserted into the second hole and first insert groove of the silicon tube; second hole and first insert groove forming a T-type shape so that the whole T-type fixation bridge can be adhered and inserted to an upper center of the silicon tube; and a third hole and second insert groove formed so that a whole T-type fix jaw of a nose support prefabricated insert can be adhered and inserted to a lower center of the silicon tube; a first hole punctured in between the first insert groove and second insert groove with a diameter which is identical to the diameters of the second hole and third hole; a protrusion enforcement unit having a largest exterior diameter positioned to correspond with both the first insert groove and second insert groove; a dent unit formed on the silicon tube that has a smaller diameter than the protrusion enforcement unit and which is located between the protrusion enforcement units; and the T-type fix jaw of the nose support prefabricated insert, being a one-body or welded type, being adhered and inserted into the third hole and second insert groove of the silicon tube, so that a nose support is mountable thereto with screws.

### [Preferred embodiment #2]

In accordance with a second aspect of the invention, there is provided a nose support device for spectacles, comprising: a fixation insert welded onto a glasses frame; a metal upper cap that protects a top of a silicon tube; a hole which penetrates through a center of the silicon tube; the silicon tube including a protrusion enforcement unit having a largest diameter formed symmetrically about the center; a dent unit which is formed on the silicon tube and which has a smaller diameter than the protrusion enforcement unit; a lower cap formed to protect a lower portion of the silicon tube; a nose support prefabricated insert formed as one-body with the lower cap and to which a nose support is mountable thereto with screws; and a first fixation pin that fixes the silicon tube and upper cap by penetrating a top portion of the silicon tube and upper cap of the fixation insert; and a second fixation pin that fixes the silicon tube and lower cap by penetrating a bottom portion of the silicon tube and lower cap of the nose support prefabricated insert.

### SUMMARY OF THE INVENTION

The device holds the following effects from the composition and coupling relationship.

The device holds a silicon tube an enhanced and special structure from the prior invention and notion, which provides a solution to the issues and negative effects of prior soft plastic or simple bar type silicon type nose support. The device brings more comfort and stability to the glasses and is thought to enhance the competitiveness of eyeglass industry domestically and nationally.

### BRIEF DESCRIPTION OF THE DRAWINGS

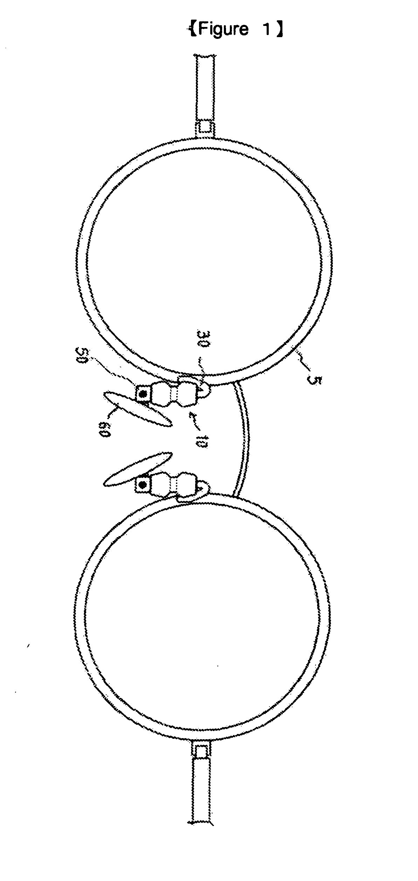

Figure 1 illustrates the standard usage status front view of the first preferred embodiment.
Figure 2 illustrates the standard usage status reference perspective view of the first preferred embodiment.
Figure 3 illustrates the reference view of the actual measurement of the silicon tube.

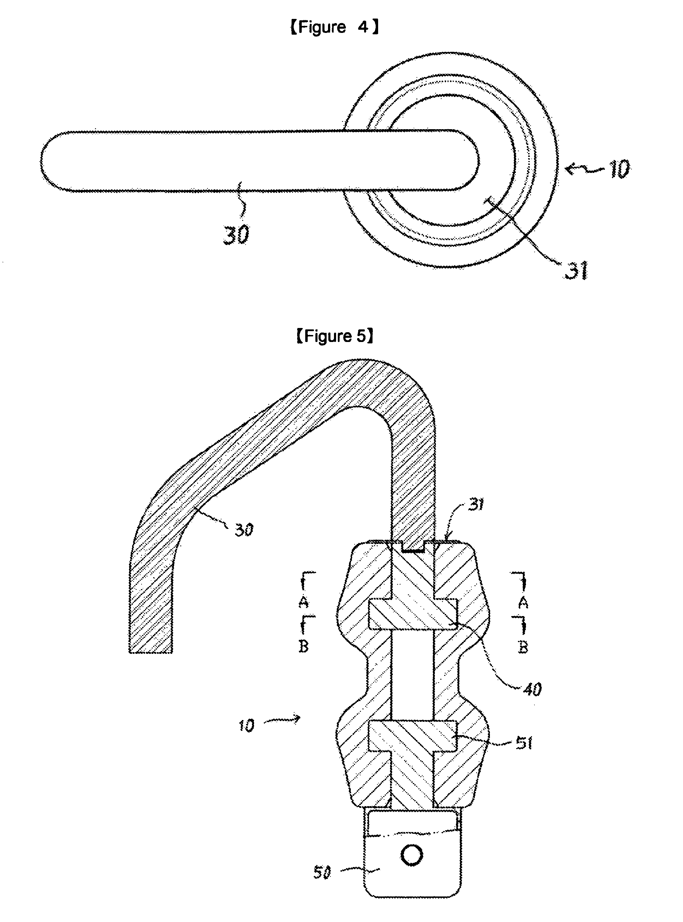

Figure 4 illustrates the plan view of the first preferred embodiment.
Figure 5 illustrates the cross-sectional view of the first preferred embodiment.

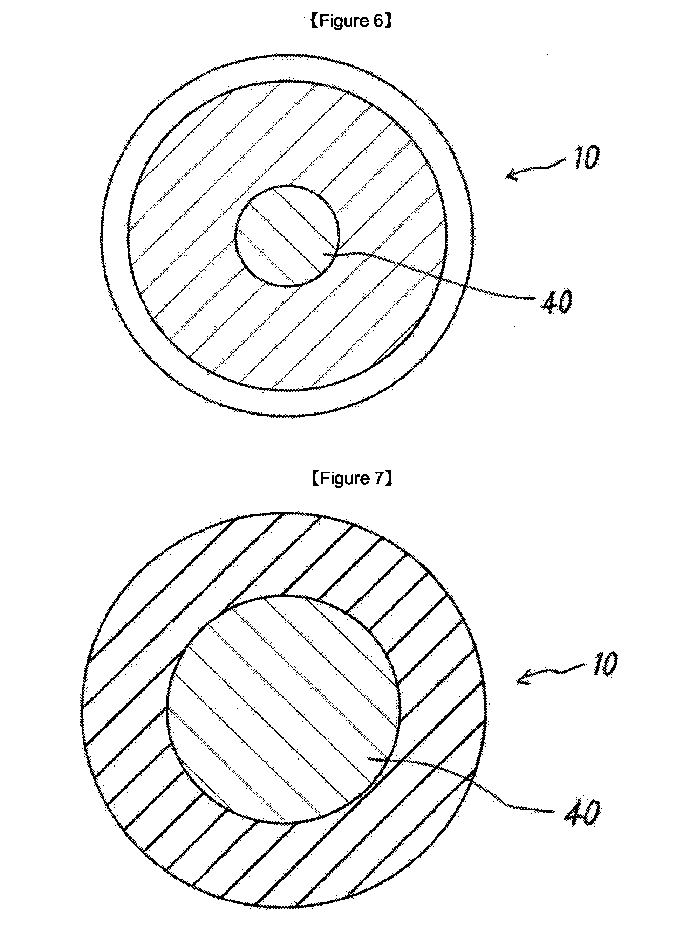

Figure 6 illustrates the A-A expansion cross-sectional view of figure 5.
Figure 7 illustrates the B-B expansion cross-sectional view of figure 5.

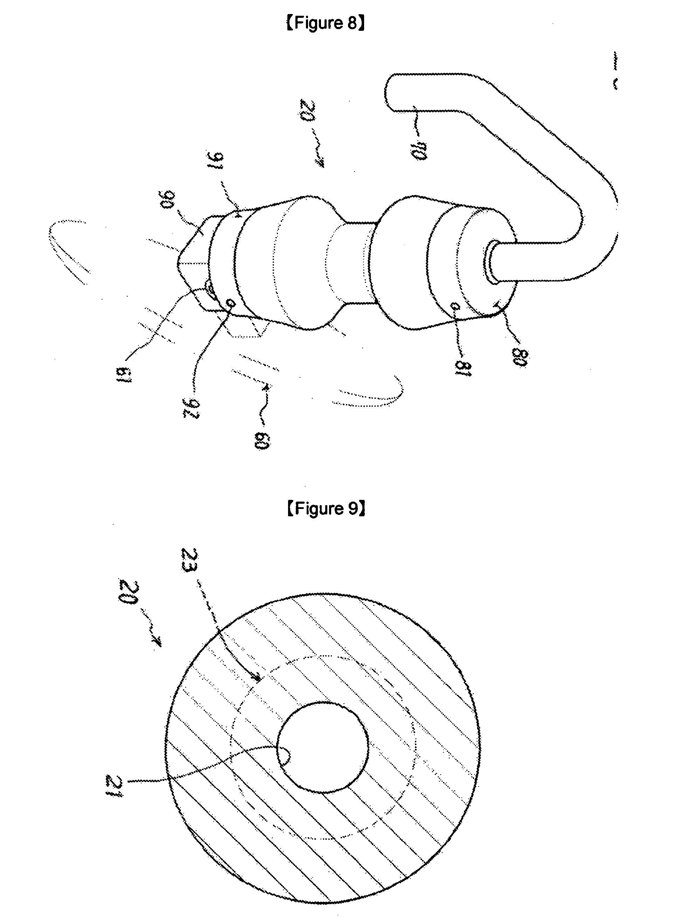

Figure 8 illustrates the standard usage status reference perspective view of the second preferred embodiment.
Figure 9 illustrates the D-D expansion cross-sectional view of figure 11.
Figure 10 illustrates the cross-sectional view of the second preferred embodiment.
Figure 11 illustrates the C-C expansion cross-sectional view of figure 10.
Figure 12 illustrates the cross-sectional view of the silicon tube structure.

### DESCRIPTION OF THE PREFERRED EMBODIMENTS

From observing the drawings of the device, the silicon tube (10) (20) introduced in the first preferred embodiment and second preferred embodiment shares identical shape and size, however differs in the inner structure, and the insert (30) (70) that is welded onto the glasses frame is just an example and can be modified into various shapes.

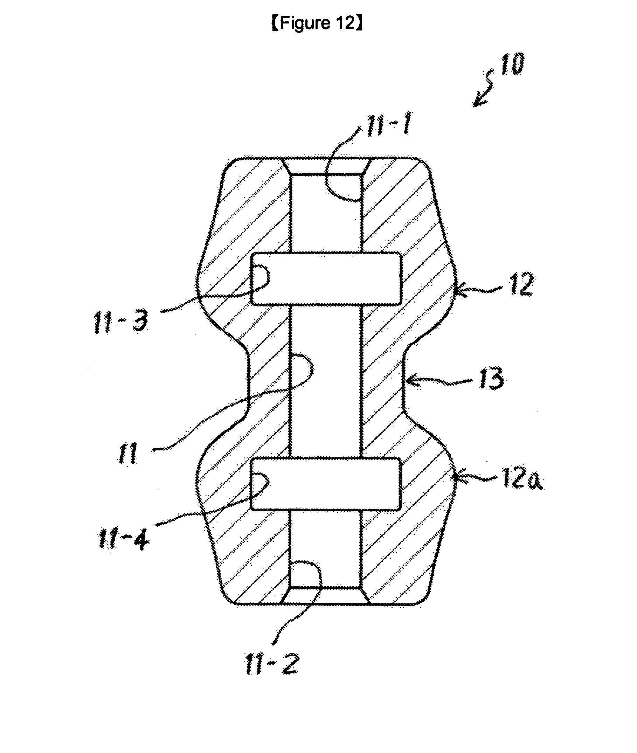

From the first preferred embodiment, the silicon tube (10), which is the main component, must be explained and Figure 12 can be referenced.

In Figure 12, the drawing shows the actual measurements of the designed and complete silicon tube (10) (20), which have gone through several trial and error processes and the silicon tube (10) has a length of 5.8mm and the diameter is 2.5 ∅ and the protrusion enforcement unit (12) (12a) holds a diameter of 3.5 ∅.

Also, the diameter for the second hole (11-1), third hole (11-2) and first hole (1) is 0.6 ∅, the diameter for the first insert groove (11-3) and second insert groove (11-4) is 1.2 ∅, furthermore, the depth for the second hole (11-1), third hole (11-2) is 1.5mm and the width (vertical) for the first insert groove (11-3) and second insert groove (11-4) is 0.5mm. Also, the dent unit (13) diameter is 2 ∅ and the distance from the top surface of the silicon tube (10) to the protrusion enforcement unit (12) is 1.7mm, and the lower surface of the silicon tube (10) to the protrusion enforcement unit (12a) is also 1.7mm.

On the other hand, the silicon tube (20) of the second preferred embodiment shows an identical size from the first preferred embodiment, where the first insert groove (11-3) and second insert groove (11-4) of the first preferred embodiment is omitted and the hole (21) is completely penetrated and the diameter of the hole (21) is around 20% smaller than the diameter of the first hole (11), second hole (11-1) and third hole (11-2) and will be later explained.

The T-type fixation bridge (40) welded onto the insert (30) inside of the second hole (11-1) of the silicon tube (10) and first insert groove (11-3) was adhered and fixed. A hardener was added to the silicon tube (10) [identical to silicon tube (20)] to provide both flexible and soft features, so that no rip was made when the second hole (11-1) was forced into the T-type fixation bridge (40).

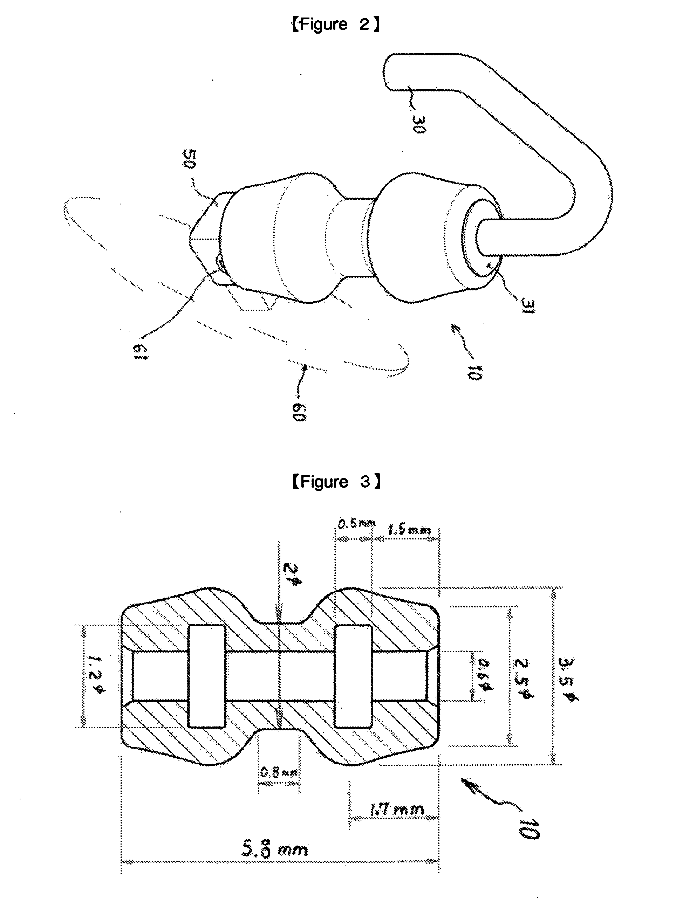

Next, the T-type fix jaw (51) of the nose support prefabricated insert (50) is also adhered and fixed onto the first insert groove (11-3) and second insert groove (11-4) of the silicon tube (10) with the same method used above. Then, the screw (61) is used to assemble nose support (60) onto the nose support prefabricated insert (50) to complete the composition as illustrated in Figure 2.

The first preferred embodiment seeks the same location of the nose support from the prior glass frame and provides compatibility to size so that when the nose support (60) is laid on the bridge of the nose, the dent unit (13) can be slightly bent and deliver soft and flexible features to the nose. Such characteristics prevent the glasses from slipping when walking or exercising and also when the lens of the glasses use heavy material like glass lens. Also, the coexistence of flexibility and softness improves the wearing sensation. The device has a silicon tube (10) that does not bend the whole but certain parts up to the protrusion enforcement unit (12) (12a) inserted between the T-type fixation bridge (40) and the T-type fix jaw (51) and only the dent unit (13) to bend due to flexibility.

From the experiments operated on the device, the nose support (60) slips or the protrusion enforcement unit (12) may not touch the nose bridge because of excessive bending due to exercising activities or heavy materials used in glasses; however this issue is solved in the device and shows the standard measurements in Figure 12. In Figure 12, the diameter of the dent unit (13) is, when standardized to use plastic lens and light glass frames, 2 ∅, and when the glasses use heavier lens like glass lens the diameter of the dent unit (13) can increase from 2.1 ∅ to 3.0 ∅ to optimize the application.

In the first preferred embodiment, the gusset plate (31) touching the top surface of the silicon tube (10) is fixed by the insert (30) and T-type fixation bridge (40). Also, when the dent unit (13) of the silicon tube (10) is being bent the upper protrusion enhancement unit (12) limits the T-type fixation bridge (40) from bending any further and helps the T-type fixation bridge (40) to find its place so that insert can be easily done. Furthermore, considering the exterior aspect the invention is not necessary. Therefore, gusset plate (31) is not mandatory.

In the first preferred embodiment, other than the force the protrusion enforcement unit (12) (12a) tries to flexibly erect the silicon tube (10) applies, when the T-type fixation bridge (40) and T-type fix jaw (51) is being inserted the thickness becomes thicker to prevent rip and to maintain durability of the T-type fixation bridge (40) and T-type fix jaw (51) status. Therefore, it plays an important role in fixing the T-type fixation bridge (40) and T-type fix jaw (51) from the silicon tube (10).

In the complete state illustrated in Figure 2, the device can endure ripping when the silicon tube (10) is pulled or the nose support (60) is pulled down with a weight of 1.5Kg. At the same time, the T-type fixation bridge (40) and T-type fix jaw (51) does not slip out from the silicon tube (10). This is a great difference from the previous introduced examples, which showed ripping or slipping out of the silicon tube or insert tube even with a weight of500g.

The second preferred embodiment of the device is as below.

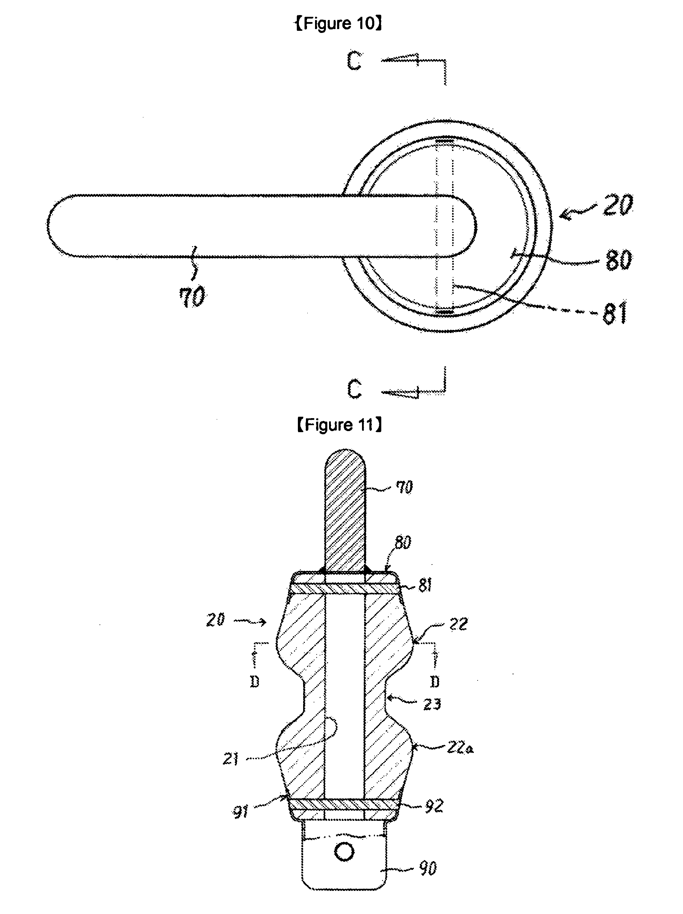

Figure 11 illustrates the second preferred embodiment, where the exterior of the silicon tube (20) is identical to the silicon tube (10) of the first preferred embodiment and only has a difference of a hole (21) that penetrates through the silicon tube (20).

As shown in Figure 11, a first fixation pin (81) that fixes the silicon tube (20) and metal cap (80) by penetrating the 3mm below the top portion of the silicon tube (20) and fixed metal cap (80) of the insert (30) with a diameter of 1 ∅. Also, a second fixation pin (92) that fixes the silicon tube (20) and cap (91) by penetrating the bottom portion of the silicon tube (20) and cap (91) of the nose support prefabricated insert (90).

Here, a hole is drilled before the first fixation pin (81) and second fixation pin (92) is inserted and the fixation pins are inserted into the hole. Using adhesives is suitable in this process and also suitable when inserting the metal cap (80) and cap of the nose support prefabricated insert (90).

Like this, in the second preferred embodiment, the hole in the center has a diameter that is around 20% smaller than the diameter of the first hole (11), second hole (11-1) and third hole (11-2). The reason for this is that the T-type fixation bridge (40) and T-type fix jaw (51) in the first preferred embodiment is inserted in the vertex of the protrusion enforcement unit (12) (12a), so when the diameter of the first hole (11) is 0.6 ∅ the device is achievable, however, in the second preferred embodiment, when the diameter of the first hole (11) is 0.6 ∅, it is likely to bend and be uncomfortable compared to the first preferred embodiment, since the hole (21) penetrates throughout the body. Therefore, the diameter of the hole (21) should be around 4.8 ∅, which makes it suitable as lightweight glasses for women and children.

Certainly, the silicon tube (20) of the second preferred embodiment does not have the protrusion enforcement unit (22) (22a) to bend when worn and has a thick structure with a metal cap (8) and cap (91) of the nose support prefabricated insert (90), along with first fixation pin (81) and second fixation pin (92) that firmly performs holding so that the dent unit (23) only bends and the protrusion enforcement unit (22) (22a) is maintained flexibly.

On the other hand, the material used in the first fixation pin (81) and second fixation pin (92) should be plastic rather than metal in manufacturing terms, and it does not matter is wood is used. As illustrated in Figure 11, when the silicon tube (20) is pulled down or the nose support (90) is pulled down with a weight of 1.5Kg, the device does not have any ripping effects and the first fixation pin (81) and second fixation pin (92) are not separated from any ripping.

From the experiments of the first preferred embodiment and second preferred embodiment, the silicon tube (10) used in the first preferred embodiment should not exceed 45 degrees even when heavy glasses are used and the upper portion of the protrusion enforcement unit (12) should not touch the nose and provide both flexible and soft features. The silicon tube (20) used in the second preferred embodiment should not exceed 45 degrees when applying heavy glasses that are 10% lighter than the first preferred embodiment and also should not touch the nose and provide both flexible and soft features.

Furthermore, the silicon tube (10) (20) should not rip or slip out even when a heavy weight of 1.5Kg is applied or when exercising. Also, the issue of silicon tube (10) (20) bending so that the tube body touches the nose bridge or slips down it was solved. The silicon tube (10) (20) has passed a durability test in enduring temperatures of 200 degrees Celsius and 60 below zero degrees Celsius.

The embodiments described above are provided by way of examples only, and various other modifications will be apparent to persons skilled in the art without departing from the scope of the invention as defined by the appended claims.

## Claims

1. A nose support device for spectacles, comprising:
a fixation insert (30) welded onto a glasses frame;
a T-type fixation bridge (40) inserted into a second hole (11-1) and first insert groove (11-3) of a silicon tube (10);
a gusset plate (31) located close to a top surface of the silicon tube (10) when the T-type fixation bridge (40) is inserted into the second hole (11-1) and first insert groove (11-3) of the silicon tube (10);
second hole (11-1) and first insert groove (11-3) forming a T-type shape so that the whole T-type fixation bridge (40) can be inserted into and adhered to an upper center of the silicon tube (10); and
a third hole (11-2) and second insert groove (11-4) formed in the tube so that a whole T-type fix jaw (51) of a nose support prefabricated insert (50) can be adhered and inserted to a lower center of the silicon tube (10);
a first hole (11) connecting and positioned between the first insert groove (11-3) and second insert groove (11-4) with a diameter which is identical to the diameters of the second hole (11-1) and third hole (11-2);
two protrusion enforcement units (12, 12a) each having a largest exterior diameter positioned to correspond with both the first insert groove (11-3) and second insert groove (11-4);
a dent unit (13) formed on the silicon tube (10) that has a smaller diameter than the protrusion enforcement unit (12, 12a) and which is located between the protrusion enforcement units (12, 12a); and
the T-type fix jaw (51) of the nose support prefabricated insert (50), being a one-body or welded type, being adhered and inserted into the third hole (11-2) and second insert groove (11-4) of the silicon tube (10), so that a nose support (60) is mountable
to the nose support prefabricated insert (50) with screws (61).

2. A nose support device for spectacles, comprising:
a fixation insert (70) welded onto a glasses frame;
a metal upper cap (80) that protects a top of a silicon tube (20);
a hole (21) which penetrates through a center of the silicon tube (20);
the silicon tube (20) including a protrusion enforcement unit (22, 22a) having a largest diameter formed symmetrically about the center;
a dent unit (23) which is formed on the silicon tube (20) and which has a smaller diameter than the protrusion enforcement unit (22, 22a);
a lower cap (91) formed to protect a lower portion of the silicon tube (20);
a nose support prefabricated insert (90) formed as one-body with the lower cap (91) and to which a nose support (60) is mountable thereto with screws (61); and
a first fixation pin (81) that fixes the silicon tube (20) and upper cap (80) by penetrating a top portion of the silicon tube (20) and upper cap (80) of the fixation insert (70); and
a second fixation pin (92) that fixes the silicon tube (20) and lower cap (91) by penetrating a bottom portion of the silicon tube (20) and lower cap (91) of the nose support prefabricated insert (90).

## Patentansprüche

1. Nasenstützvorrichtung für Brillen, umfassend:
einen Fixierungseinsatz (30), der auf einen Gläserrahmen geschweißt ist;
eine T-Typ-Fixierungsbrücke (40), die in ein zweites Loch (11-1) und eine erste Einsetznut (11-3) eines Siliciumrohres (10) eingesetzt ist;
ein Knotenblech (31), das nahe einer oberen Fläche des Siliciumrohres (10) angeordnet ist, wenn die T-Typ-Fixierungsbrücke (40) in das zweite Loch (11-1) und die erste Einsetznut (11-3) des Siliciumrohres (10) eingesetzt ist;
wobei das zweite Loch (11-1) und die erste Einsetznut (11-3) eine T-Typ-Form bilden, so dass die gesamte T-Typ-Fixierungsbrücke (40) in eine obere Mitte des Siliciumrohres (10) eingesetzt und daran angehaftet werden kann; und
ein drittes Loch (11-2) und eine zweite Einsetznut (11-4), die im Rohr gebildet sind, so dass eine gesamte T-Typ-Fixierbacke (51) eines vorgefertigten Nasenstützeinsatzes (50) an einer unteren Mitte des Siliciumrohres (10) angehaftet und in diese eingesetzt werden kann;
ein erstes Loch (11), das die erste Einsetznut (11-3) und die zweite Einsetznut (11-4) verbindet und zwischen diesen angeordnet ist, mit einem Durchmesser, der zu den Durchmessern des zweiten Lochs (11-1) und des dritten Lochs (11-2) identisch ist;
zwei Vorsprungdurchsetzungseinheiten (12, 12a) mit jeweils einem größten Außendurchmesser, die angeordnet sind, um sowohl der ersten Einsetznut (11-3) als auch der zweiten Einsetznut (11-4) zu entsprechen;
eine Vertiefungseinheit (13), die auf dem Siliciumrohr (10) gebildet ist, die einen kleineren Durchmesser als die Vorsprungdurchsetzungseinheit (12, 12a) aufweist und zwischen den Vorsprungdurchsetzungseinheiten (12, 12a) angeordnet ist; und
wobei die T-Typ-Fixierungsbacke (51) des vorgefertigten Nasenstützeinsatzes (50) einstückig oder geschweißt ist und an dem dritten Loch (11-2) und der zweiten Einsetznut (11-4) des Siliciumrohres (10) angehaftet und in diese eingesetzt ist, so dass eine Nasenstütze (60) mit Schrauben (61) am vorgefertigten Nasenstützeinsatz (50) befestigbar ist.

2. Nasenstützvorrichtung für Brillen, umfassend:
einen Fixierungseinsatz (70), der auf einen Gläserrahmen geschweißt ist;
eine metallische obere Kappe (80), die eine Oberseite eines Siliciumrohres (20) schützt;
ein Loch (21), das eine Mitte des Siliciumrohres (20) durchdringt;
wobei das Siliciumrohr (20) eine Vorsprungdurchsetzungseinheit (22, 22a) mit einem größten Durchmesser aufweist, symmetrisch um die Mitte gebildet;
eine Vertiefungseinheit (23), die auf dem Siliciumrohr (20) gebildet ist und einen kleineren Durchmesser als die Vorsprungdurchsetzungseinheit (22, 22a) aufweist;
eine untere Kappe (91), die gebildet ist, um einen unteren Abschnitt des Siliciumrohres (20) zu beschützen,
einen vorgefertigten Nasenstützeinsatz (90), der mit der unteren Kappe (91) einstückig ausgebildet ist und an den eine Nasenstütze (60) mit Schrauben (61) befestigbar ist; und
einen ersten Fixierungsstift (81), der das Siliciumrohr (20) und die obere Kappe (80) durch Durchdringen eines oberen Abschnitts des Siliciumrohres (20) und der oberen Kappe (80) des Fixierungseinsatzes (70) fixiert; und
einen zweiten Fixierungsstift (92), der das Siliciumrohr (20) und die untere Kappe (91) durch Durchdringen eines unteren Abschnitts des Siliciumrohres (20) und der unteren Kappe (91) des vorgefertigten Nasenstützeinsatzes (90) fixiert.

## Revendications

1. Dispositif de support nasal pour lunettes, comprenant :
- un insert de fixation (30) soudé sur une monture de lunettes ;
- un pont de fixation de type T (40) introduit dans un deuxième trou (11-1) et une première rainure d'insert (11-3) d'un tube de silicium (10) ;
- une plaque-gousset (31) située près d'une surface supérieure du tube de silicium (10) lorsque le pont de fixation de type T (40) est introduit dans le deuxième trou (11-1) et la première rainure d'insert (11-3) du tube de silicium (10) ;
- un deuxième trou (11-1) et une première rainure d'insert (11-3) formant une forme de type T de telle sorte que l'ensemble du pont de fixation de type T (40) peut être introduit dans et amené à adhérer à un centre supérieur du tube de silicium (10) ; et
- un troisième trou (11-2) et une seconde rainure d'insert (11-4) formés dans le tube de telle sorte que l'ensemble d'une mâchoire de fixation de type T (51) d'un insert préfabriqué de support nasal (50) peut être amené à adhérer et introduit à un centre inférieur du tube en silicium (10) ;
- un premier trou (11) reliant et positionné entre la première rainure d'insert (11-3) et la seconde rainure d'insert (11-4) avec un diamètre qui est identique aux diamètres du deuxième trou (11-1) et du troisième trou (11-2) ;
- deux unités d'application en saillie (12, 12a) ayant chacune un diamètre extérieur le plus grand positionné pour correspondre à la fois à la première rainure d'insert (11-3) et à la seconde rainure d'insert (11-4) ;
- une unité de creux (13) formée sur le tube de silicium (10) qui a un diamètre plus petit que l'unité d'application en saillie (12, 12a) et qui est située entre les unités d'application en saillie (12, 12a) ; et
- la mâchoire de fixation de type T (51) de l'insert préfabriqué de support nasal (50), qui est d'un type d'un seul tenant ou soudé, qui est amenée à adhérer et introduite dans le troisième trou (11-2) et la seconde rainure d'insert (11-4) du tube de silicium (10), de telle sorte qu'un support nasal (60) est apte à être monté sur l'insert préfabriqué de support nasal (50) avec des vis (61).

2. Dispositif de support nasal pour lunettes, comprenant :
- un insert de fixation (70) soudé sur une monture de lunettes ;
- un capuchon supérieur métallique (80) qui protège une partie supérieure d'un tube de silicium (20) ;
- un trou (21) qui pénètre à travers un centre du tube de silicium (20) ;
- le tube de silicium (20) comprenant une unité d'application en saillie (22, 22a) ayant un diamètre le plus grand formé de manière symétrique autour du centre ;
- une unité de creux (23) qui est formée sur le tube de silicium (20) et qui a un diamètre plus petit que l'unité d'application en saillie (22, 22a) ;
- un capuchon inférieur (91) formé pour protéger une partie inférieure du tube de silicium (20) ;
- un insert préfabriqué de support nasal (90) formé d'un seul tenant avec le capuchon inférieur (91) et auquel un support nasal (60) est apte à être monté avec des vis (61) ; et
- une première goupille de fixation (81) qui fixe le tube de silicium (20) et le capuchon supérieur (80) par pénétration d'une partie supérieure du tube de silicium (20) et du capuchon supérieur (80) de l'insert de fixation (70) ; et
- une seconde goupille de fixation (92) qui fixe le tube de silicium (20) et le capuchon inférieur (91) par pénétration d'une partie inférieure du tube de silicium (20) et du capuchon inférieur (91) de l'insert préfabriqué de support nasal (90).
